# EUROPEAN PATENT APPLICATION

(11) **EP 4 650 611 A1**
(43) Date of publication of application: **19.11.2025**
(21) Application number: 25175974.2
(22) Date of filing: 13.05.2025
(51) Int. Cl.: F16B 7/14

(54) **EXTENDABLE POLE FOR CLEANING TOOL**

(30) Priority: 13.05.2024 US 202463645988 P
(71) Applicant: Unger Marketing International, LLC, Bridgeport CT 06610 (US)
(72) Inventor: BUCKLEY, James M., New Hartford, 06057 (US); HARRINGTON, William P., Newtown, 06470 (US); ZHUO, Qinxue, Suzhou, 215122 (CN)
(74) Representative: Müller Schupfner & Partner Patent- und Rechtsanwaltspartnerschaft mbB (Muc)

(57) **Abstract**

Telescoping pole systems, glides, and clamps thereof are described. The telescoping pole system includes a plurality of nested poles. The glides include a body having one or more projections. The projections lock the glides into a pole. The glide contacts a flange of the clamp, thereby prevent a pole from being fully removed from a pole it is nested within. The poles of such systems may be multi-lobed.

## Description

### CROSS-REFERENCE

This application claims the benefit of U.S. Provisional Application Serial No. 63/645,988, filed May 13, 2024, the entire disclosure of which is incorporated herein by reference.

### BACKGROUND

The subject matter disclosed herein relates to handles or poles for use with cleaning implements, such as window squeegees, dusters, ceiling fan dusters brooms, wash brushes, sponges, and other high-access cleaning implements. In particular the subject of the present disclosure is to non-circular telescopic poles that couple to circular and non-circular cleaning implements, facilitating the use of the cleaning implements.

When cleaning, it may be difficult to reach certain locations, such as corners, ceilings, under furniture, etc. As such, poles or handles for cleaning implements may be telescopic to enable adjusting a reach of the cleaning implements. While existing poles are suitable for their intended purposes the need for improvement remains, particularly in providing an ergonomic shape pole having the features described herein. Furthermore, the cleaning implements may have a circular or non-circular body that requires the telescopic pole to have the same shape, thus restricting the telescopic poles that may be used with the cleaning implement.

### BRIEF DESCRIPTION

According to some embodiments, telescoping pole systems are provided. The telescoping pole systems include a first pole, a second pole, and a third pole, wherein the first pole is configured to fit within the second pole and the second pole is configured to fit within the third pole, an adapter selectively coupled to a first end of the telescoping pole system, at least one glide, and a clamp coupled at the first end.

In addition to one or more of the features described above, or as an alternative, further embodiments of the telescoping pole systems may include the first, second, and third pole having a multi-lobe.

In addition to one or more of the features described above, or as an alternative, further embodiments of the telescoping pole systems may include at least one of a grip arranged on an end of the third pole away from a location where the clamp connects the plurality of poles.

In addition to one or more of the features described above, or as an alternative, further embodiments of the telescoping pole systems may include the adapter is selectively coupled to a tool connector or a cleaning implement.

In addition to one or more of the features described above, or as an alternative, further embodiments of the telescoping pole systems may include the adapter having a collar located on a middle portion of the adapter that abutting the first end.

In addition to one or more of the features described above, or as an alternative, further embodiments of the telescoping pole systems may include the at least one glide including a first glide located between the first pole and second pole and a second glide located between the second pole and third pole.

In addition to one or more of the features described above, or as an alternative, further embodiments of the telescoping pole systems may include the first glide coupled to an exterior surface of first pole at a second end and the second glide coupled to an exterior surface of the second pole at a second end.

In addition to one or more of the features described above, or as an alternative, further embodiments of the telescoping pole systems may include the first glide including at least one protrusion that couples with at least one hole in the first pole and the second glide including at least one protrusion that couples with at least one hold in the second pole.

In addition to one or more of the features described above, or as an alternative, further embodiments of the telescoping pole systems may include the first glide being chemically coupled to the exterior surface of the first pole and the second glide being chemically coupled to the exterior surface of the second pole.

In addition to one or more of the features described above, or as an alternative, further embodiments of the telescoping pole systems may include ribs on an interior surface of the second pole and the third pole for contacting the first and second glide.

In addition to one or more of the features described above, or as an alternative, further embodiments of the telescoping pole systems may include the clamp having a body, an overhead cam lock, and a collar.

In addition to one or more of the features described above, or as an alternative, further embodiments of the telescoping pole systems may include the clamp having a flange that extends toward an exterior surface of a pole, contacting the at least one glide.

In addition to one or more of the features described above, or as an alternative, further embodiments of the telescoping pole systems may include the at least one glide contacting a bottom surface of a top portion of the clamp, stopping the telescoping pole system at a maximum length.

In addition to one or more of the features described above, or as an alternative, further embodiments of the telescoping pole systems may include that the body has a first diameter opening at a first end and a second diameter opening at a second end, wherein the first diameter opening is smaller than the second diameter opening.

In addition to one or more of the features described above, or as an alternative, further embodiments of the clamps may include a locking protrusion formed at an end of each locking extension.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a schematic isometric view of a telescoping pole system in accordance with an embodiment of the present disclosure;
FIG. 2 is a schematic isometric view of poles of the telescoping pole system in accordance with an embodiment of the present disclosure;
FIG. 3 is an unassembled schematic of the telescoping pole system of FIG. 1;
FIG. 4A is a rear perspective isometric view of an adapter of the telescoping pole system in accordance with an embodiment of the present disclosure;
FIG. 4B is a front perspective isometric view of the adapter of the telescoping pole system of FIG. 4A;
FIG. 5 is an isometric view of the adapter and clamps of the telescoping pole system of FIGS. 4A and 4B;
FIG. 6 is a cross-sectional illustration of a glide portion of the telescoping pole system in a first position in accordance of an embodiment of the present disclosure;
FIG. 7 is a cross-sectional illustration of the glide portion of the telescoping pole system in a second or extended position in accordance of an embodiment of the present disclosure;
FIG. 8A is an isometric view of a clamp of the telescoping pole system in accordance of an embodiment of the present disclosure;
FIG. 8B is a schematic illustration of a telescoping pole system of FIG. 8A;
FIG. 9 is an isometric view of a handle of the telescoping pole system in accordance of an embodiment of the present disclosure;
FIG. 10 is a schematic cross-sectional illustration of a two-lobe pole system in accordance with an embodiment of the present disclosure;
FIG. 11 is a schematic cross-sectional illustration of a three-lobe pole system in accordance with an embodiment of the present disclosure; and
FIG. 12 is a schematic cross-sectional illustration of a four-lobe pole system in accordance with an embodiment of the present disclosure.

The detailed description explains embodiments of the disclosure, together with advantages and features, by way of example with reference to the drawings.

### DETAILED DESCRIPTION

Embodiments of the present disclosure provide for a telescopic pole that is used with cleaning implements, such as window squeegees and brushes, dusters, ceiling fan dusters, brooms, wash brushes, sponges, mops, and other high-access cleaning implements which allows a user to adjust the length of a pole upon which the cleaning implement is attached. Embodiments of the present disclosure provide for a telescopic pole for use with implements that has an adjustable length to accommodate a user's height and/or reach of a cleaning implement. Embodiments of the present disclosure provide for an adapter that enables the telescopic pole to be used with implements that have a circular or non-circular body. Embodiments of the present disclosure provide for glides that enable extending nested poles relative to each other and assist a user from un-nesting the poles.

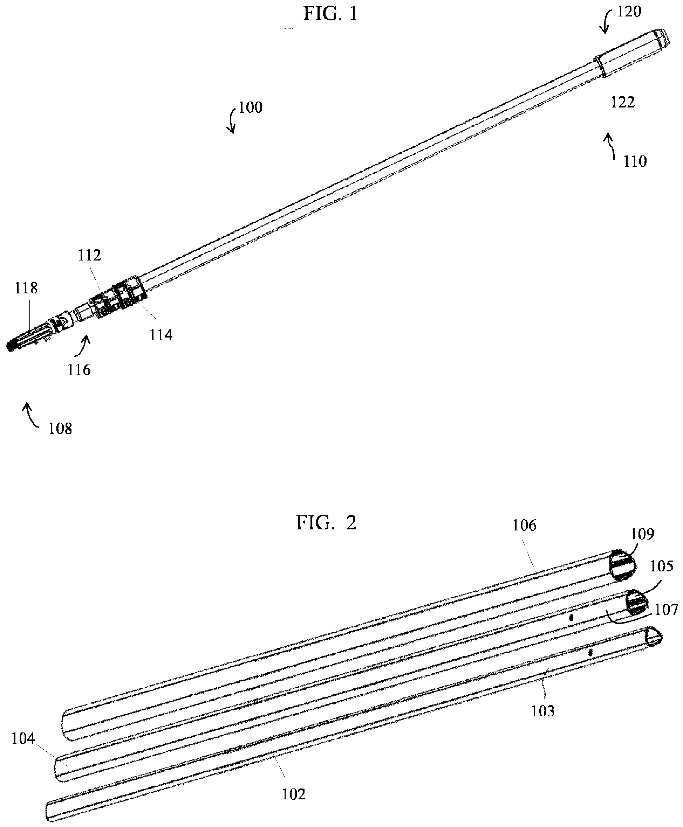

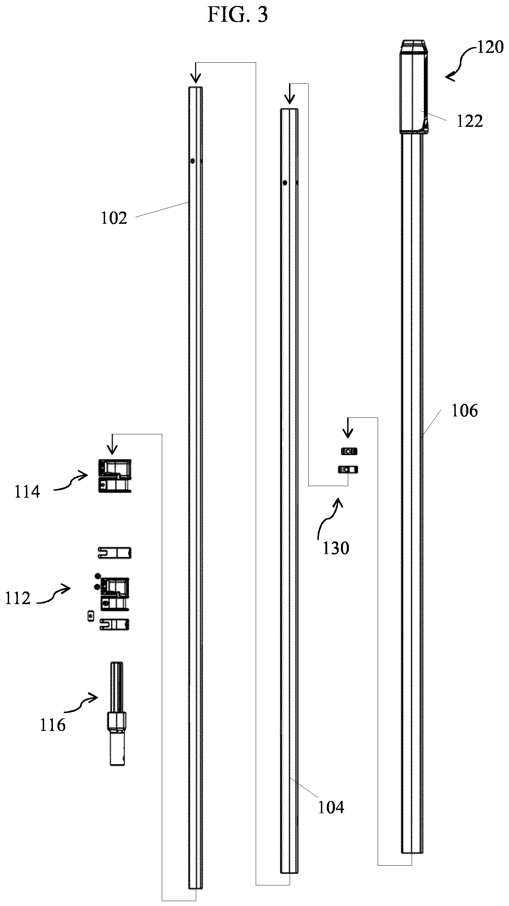

Referring to FIGS. 1-3 schematic illustrations of a telescoping pole system 100 in accordance with an embodiment of the present disclosure are shown. FIG. 1 illustrates an isometric assembled view of the telescoping pole system 100 and FIG. 3 illustrates the telescoping pole system 100 in an unassembled view. The telescoping pole system 100 includes a plurality of poles that are sized to interlock or be telescopically assembled. As shown in FIG. 2, the poles are a tubular member with an oval, rounded triangular, or trilobal cross section, made from a metallic or composite material, such as but not limited to: aluminum, steel, metallic alloys, fiberglass, carbon fiber and epoxy, or wood or a combination of the foregoing with or without grips, texture or surface treatments for example. It should be appreciated that other materials, such as a plastic/polymer material or a combination or plastic and metal for example. In accordance with embodiments of the present disclosure, the poles may be multi-lobed, ranging from two lobes or more. Such multi-lobe geometry can enable a reduction in clamping pressure used because a rounded/lobed geometry prevents relative rotation which is typical of round or circular geometries. In some embodiments, the multi-lobe geometry may provide for a more comfortable or ergonomic shape for the user to hold. It will be appreciated that the geometry of the nested poles will have the same geometric cross-sectional shape, with different diameters, radii, or other dimension selected to allow for one structure to fit within and move freely relative to another structure when not clamped together, as described herein. The term lobe as used herein means a curved or rounded portion or division between two sides. As such, embodiments of multi-lobe configurations includes two-sided, three-sided, four-sided, fived-sided, etc. geometric profiles.

The telescoping pole system 100 can include two to ten nested poles, inclusive. In an embodiment, the telescoping pole system 100 can include three poles. The first pole 102 is nested within the second pole 104 and the second pole 104 is nested within the third pole 106. That is, the first pole 102 is configured and dimensioned to fit within and be moveable within, along, and relative to the second pole 104. Similarly, the second pole 104 is configured and dimensioned to fit within and be moveable within, along, and relative to the third pole 106. In an embodiment, the first pole 102 and the second pole 104 are configured to fit within and be moveable within, along, and relative to the second pole 104 and the third pole 106, respectively, with a pole gap formed therebetween. The pole gap is a spacing between an external surface 103 of the first pole 102 and an internal surface 105 of the second pole 104 and a spacing between an external surface107 of the second pole 104 and an internal surface 109 of the third pole 106.

Each of the first pole 102 and second pole 104 may be selectively fixed relative to the second pole 104 and third pole 106 respectively by at least one clamp. When a first clamp 112 and a second clamp 114 are in a released position or open state, the respective inner poles 102, 104 may be slideably moveable relative to the respective outer poles 104, 106. When the first and the second clamp 112, 114 are in a secured position or closed state, the respective inner poles 102, 104 are fixed relative to the respective outer poles 104, 106. In an embodiment, the clamps 112, 114 are compression clamps that couple to the respective inner poles 102, 104 when in the closed position.

The telescoping pole system 100 extends from a first end 108 to a second end 110. As shown, the first pole 102 includes an adapter 116 at the first end 108. The adapter 116 is configured to selectively or releaseably couple with a tool connector 118 or directly couple with a cleaning implement (not pictured). The tool connector 118 may be configured to selectively or releaseably engage with and attach a cleaning implement to the telescoping pole system 100, such as floor or window squeegees and brushes, dusters, brooms, brushes, sponges, mops, window cleaning devices, car/vehicle cleaning devices, building cleaning devices, ceiling cleaning device, and other high-access cleaning implements or any other type of cleaning device/implement that may require or employ an extendable or telescoping pole system. In an embodiment, the tool connector 118 includes a conical portion with threads on an end to engage the cleaning implement. In an alternative embodiment, the cleaning implement is selectively or releaseably engaged with the adapter 116. The third pole 106 includes a handle 120 with a grip 122 at the second end 110. The grip 122 can have a substantially smoother surface. In an alternative embodiment, the grip 122 can include at least one rib. In another embodiment, the grip 122 can include hexagon pattern that covers a portion or all of the grip 122.

The clamps 112, 114 engage with an exterior surface of the nested pole being secured at a desired length. In an embodiment, the clamp has a first end with a first diameter opening to receive the first pole 102 and a second end with a second diameter opening to receive the second pole 104, with the two openings being different sizes. In the same embodiment, the clamp has a first end with a first diameter opening to receive the second pole 104 and a second end with a second diameter opening to receive the third pole 106, with the two openings being different sizes. The first diameter opening of clamps 112, 114 are sized such that the second pole 104 and third pole 106 cannot pass therethrough respectively. In an embodiment, the second and third pole 104, 106 can include a clamping aperture at an end thereof, enabling a portion of the clamp 112, 114 to pass through the clamping apertures and engage with an exterior surface of the first and second pole 102, 104, respectively. In an embodiment, the first and second poles 102, 104 are compression clamps. In an embodiment, the second pole 104 includes clamping apertures that enable a portion of a first clamp 112 to pass through the second pole 104 and engage with the first pole 102. Similarly, the third pole 106 including clamping aperture that enable a portion of a second clamp 114 to pass through the third pole 106 and engage with the second pole 104. In an embodiment, the outer most pole, here the third pole 106, may include a mid-grip (not pictured) to aid a user in operating or using a cleaning implement attached to the first end 108. The clamps 112, 114 provide an axial and rotational force onto the telescopic poles to hold the poles at a certain length.

In some embodiments, the telescoping system may include a fourth pole and a third clamp, wherein the third pole 106 is configured to fit within the fourth pole, and the third clamp is configured to secure the third pole relative to the fourth pole. The third clamp has the same features as clamps 112, 114.

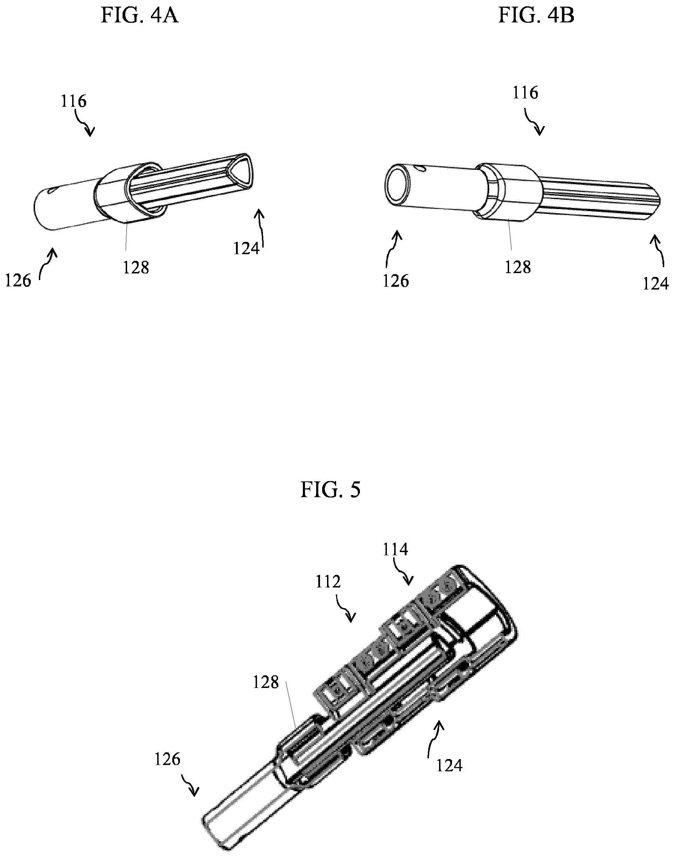

Turning now to FIGS. 4-5, schematic illustrations of the adapter 116 in accordance with an embodiment of the present disclosure is shown. FIGS. 4A-4B illustrates an isometric illustration of the adapter showing an interior structure thereof, from two perspectives and FIG. 5 illustrates the adapter coupled to the poles, in cross-section.

In an embodiment, the adapter 116 is configured to selectively or releaseably couple with a tool connector 118 or directly couple with a cleaning implement, as described above. A distal end 124 of the adapter 116 has the same cross section shape as the plurality of poles, oval, rounded triangular, or trilobal, such that it is nested within the first pole 102 and coupled thereto. The adapter 116 can be mechanically, adhesively, or chemically coupled into an end of the first pole 102. In an embodiment, a clamp secures the adapter 116 in place. A proximal end 126 of the adapter 116 has a circular cross section such that it may couple to a tool connector 118 or cleaning implement. In an embodiment, the adapter 116 includes a collar 128. The collar 128 contacts the first end 108 of the poles.

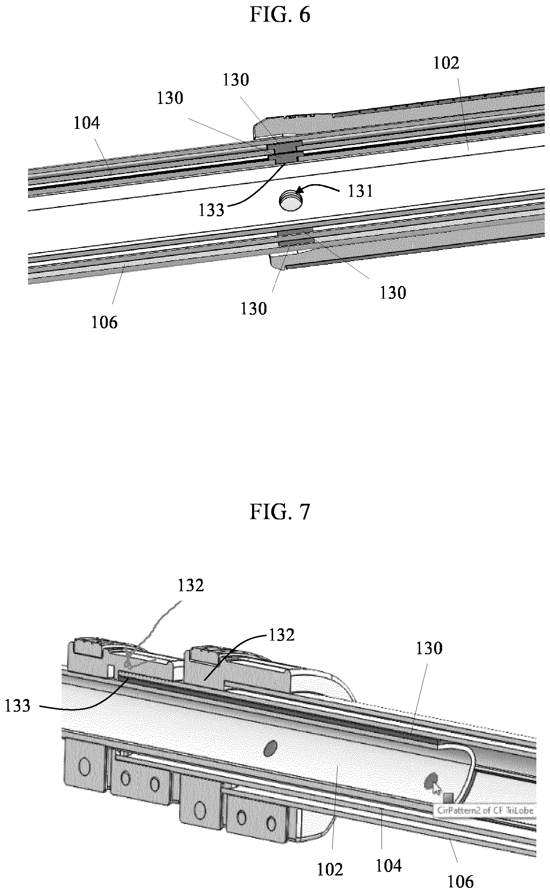

Turning now to FIGS. 6-7, schematic illustrations of the glide 130 in accordance with an embodiment of the present disclosure is shown. FIGS. 6-7 illustrates the glide coupled to the poles, in cross-section.

The telescoping system 100 includes a plurality of glide 130. In an embodiment, the telescoping system 100 includes one glide. In an alternative embodiment, the telescoping system 100 includes a glide in between each pole. In an alternative embodiment, the telescoping system 100 includes more than one glide and onw less glides than the total number of poles. The glides 130 act as a spacer, to maintain the pole gap and reduce wear, and to aid in the sliding of the poles as the telescoping system 100 is extended. The interior surface of the second and third pole 104, 106 can include ribs to secure the glide 130 in place. In an embodiment, the ribs can extend the length of the second and third pole 104, 106. In an alternative embodiment, the ribs extend a portion of the length of the second and third poles 104, 106. The first and second pole 102, 104 can also include one or more holes 131 at the second end 110 of the telescoping system 100 to couple with one or more projections 133 extending from the glide 130. In an alternative embodiment, the glide is secured to the first and second pole 102, 104 via an adhesive or chemical bond.

When the telescoping system 100 is being extended, the glide 130 moves with the pole it is coupled too toward the first end 108. When the pole is extended to a maximum length, for example the first pole 102 is being extended or the second pole 104 is being extended, the glide 130 contacts the clamp 112, 114 to prevent a user from accidentally removing the pole from the telescoping pole system 100. In an embodiment, the clamp 112, 114 includes a flange 132 extending toward the exterior surface of the first pole 102 and the second pole 104, respectively. In an embodiment, the flange extends inwardly from a body portion. The flange and body portion may cooperate to define a counter-bore that receives the glide when the pole is extended. A proximal end 133 of the glide 130 contacts the flange 132 to stop the pole from extending further. In an alternative embodiment, the glide 130 contacts a bottom surface of a top portion of the clamp 112, 114 to stop the pole from extending further once the maximum length is reached. The glide 130 can be one to seven inches in length, inclusive.

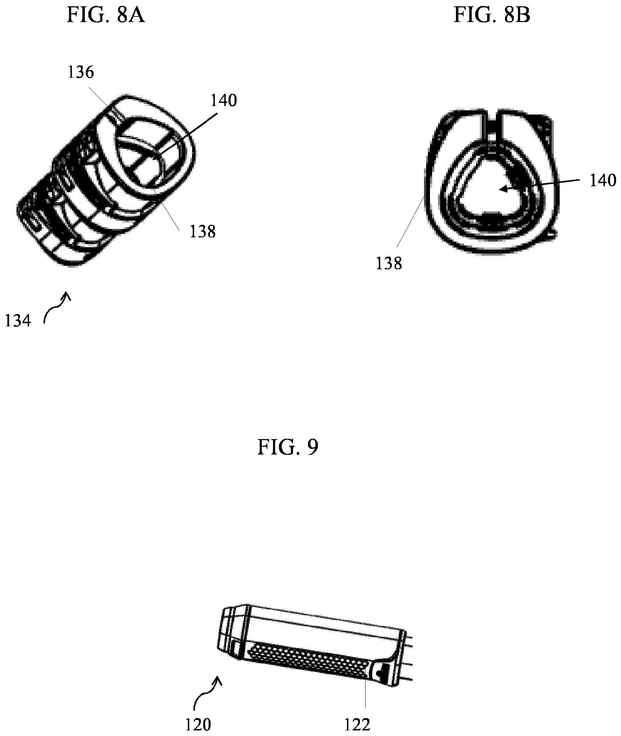

Referring to FIGS. 8A-8B, the clamp 112, 114 includes a body 134, and an overhead cam lock 136 and collar 138. In an embodiment, the body 134 has a first diameter opening at a first end 136 and a second diameter opening at a second end 138. The first diameter opening has a first diameter D₁ that is less than or smaller than a second diameter D₂ of the second diameter opening. The through-aperture 140 is defined to include the first diameter opening at the first end 136 and the second diameter operating at the second end 138. The first diameter D₁ is selected such that the first pole 102 can pass therethrough but the second pole 104 cannot. The second diameter D₂ is selected to receive the second pole 204. The body 134 includes the flange 132, as described above, positioned at the first end 136 of the body 134 (e.g., as shown in FIG. 7). The body 134 includes the flange 132 that are configured to cooperate with the glide 130 to stop axial movement of the second pole 104 when the second pole 104 is installed within the clamp 112, 114, and stop axial movement of the third pole 106 when the third pole 106 is installed within the clamp 112, 114. In an embodiment, the body and cam lock has a single diameter. The tension force the clamp 112, 114 applies on the telescoping pole system 100 can be adjusted. The clamp 112, 114, can include a rotatable fastener that is rotated to increase or decrease the tension force. The through-aperture 140 is the same geometric shape as the poles of the telescoping pole system 100.

In the embodiment where the exterior surface of the poles include clamping apertures, as described above, the clamp 112, 114 further includes positioning protrusions and locking protrusions arranged within the interior of the body 134. The protrusions are sized and shaped to fit within and pass through the clamping apertures of the second and third pole 104, 106 and engage with an outer surface of the first and second pole 102, 104 (e.g., at lobes of the first and second pole). The positioning protrusions are fixed in position and configured to engage into clamping apertures of the second and third pole 104, 106, respectively. When the positioning protrusions engage with the clamping apertures of the second and third pole 104, 106, the second and third pole 104, 106, become locked with respect to the clamp 112, 114, respectively. The positioning protrusions may be configured to snap-fit into respective clamping apertures to secure the clamp 112, 114 to the second and third pole 104, 106, respectively. As such, the second and third pole 104, 106 may become fixedly attached to the clamp 112, 114, respectively.

Advantageously, the clamp systems described herein enable telescoping poles of varying configurations (e.g., lengths/sizes/number of components).

In view of the above, it will be appreciated that any number of poles may be joined and slidably moveable relative to each other by use of clamps as shown and described herein. Further, the poles may be customized to specific applications, including grips, mid-grips, and tool connectors, which may be interchangeable or exchangeable to enable swapping or changing of a specific tool and system configuration.

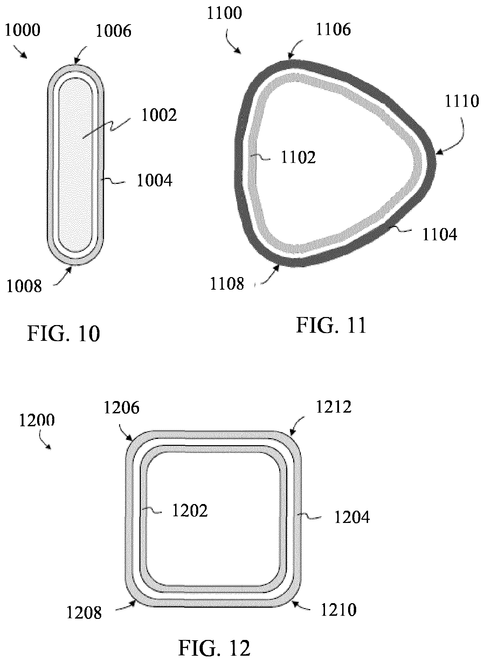

As noted above, different multi-lobe configurations of both the poles and the associated clamps may be employed without departing from the scope of the present disclosure. For example, turning to FIGS. 10-12, various different multi-lobe geometry poles are shown. It should further be appreciated that while embodiments herein may describe the multi-lobe geometry of three poles, this is for example reasons and the claims should not be so limited. In other embodiments, the telescoping pole system 100 includes more or fewer than three poles possessing the multi-lobe geometry described herein.

In FIG. 10, a two-lobe system 1000 having a first pole 1002 and a second pole 1004 are shown. The first pole 102 is arranged within the second pole #1004 , and thus have similar lobe-geometries. The poles 1002, 1004 have a first lobe 1006 and a second lobe 1008, thus defining a two-lobe geometry. In such systems, an associated clamp in accordance with embodiments of the present disclosure can engage at the first and second lobes 1006, 1008 to securely connect the two poles 1002, 1004. Further, it is noted that such geometry prevents rotation of the two poles 1002, 1004 relative to each other, thus reducing the required clamping force necessary to secure the two poles 1002, 1004(e.g., no force needed to prevent relative rotation).

In FIG. 11, a three-lobe system 1100 having a first pole 1102 and a second pole 1104 are shown. The first pole 1102 is arranged within the second pole 1104, and thus have similar lobe-geometries. The poles 1102, 1104 have a first lobe 1106, a second lobe 1108, and a third lobe 1110, thus defining a three-lobe geometry. In such systems, an associated clamp in accordance with embodiments of the present disclosure can engage at the first, second, and third lobes 1106, 1108, 1110 to securely connect the two poles 1102, 1104. Further, it is noted that such geometry prevents rotation of the two poles 1102, 1104 relative to each other, thus reducing the required clamping force necessary to secure the two poles 1102, 1104(e.g., no force needed to prevent relative rotation).

In FIG. 12, a four-lobe system 1200 having a first pole 1202 and a second pole 1204 are shown. The first pole 1202 is arranged within the second pole 1204, and thus have similar lobe-geometries. The poles 1202, 1204 have a first lobe 1206, a second lobe 1208, a third lobe 1210, and a fourth lobe 1212 thus defining a four-lobe geometry. In such systems, an associated clamp in accordance with embodiments of the present disclosure can engage at the lobes 1206, 1208, 1210, 1212 of the pole 1202, 1204 to securely connect the two poles 1202, 1204 Further, it is noted that such geometry prevents rotation of the two poles 1202, 1204 relative to each other, thus reducing the required clamping force necessary to secure the two poles 1202, 1204 (e.g., no force needed to prevent relative rotation).

The multi-lobe geometry of the poles of the present disclosure provides advantages in avoiding having the poles rotate relative to each other, when one pole is arranged within another pole. One advantage of this anti-rotation geometry of the poles enables the clamps of the present disclosure to apply less gripping force than convention clamps which must also provide for anti-rotation of the poles. Furthermore, such multi-lobed geometry provides for specific locations of engagement between the clamp and the poles. That is, clamps configured to engage with the poles as described herein will have similar multi-lobe geometries and provide for engagement to securely lock and affix one pole relative to another pole. The glide included in between the poles of the present disclosure creates a buffer between the buffers, facilitating a smoother extension of the nested poles.

The telescoping system 100, two-lobe system 1000, three-lobe system 1100, and four-lobe system 1200 may include additional features described below.

In addition to one or more of the features described above, or as an alternative, further embodiments of the telescoping pole systems may include the adapter having a multi-lobe geometry at a distal end and a circular geometry at a proximal end.

In addition to one or more of the features described above, or as an alternative, further embodiments of the telescoping pole systems may include that the body has a constant diameter and defines a through-aperture.

In addition to one or more of the features described above, or as an alternative, further embodiments of the clamps may include at least one positioning protrusion formed on an interior surface of body.

In addition to one or more of the features described above, or as an alternative, further embodiments of the clamps may include that the body has a multi-lobe geometry.

In addition to one or more of the features described above, or as an alternative, further embodiments of the telescoping pole systems may include a fourth pole and a third clamp, wherein the third pole is configured to fit within the fourth pole, and the third clamp is configured to secure the third pole relative to the fourth pole.

It will be appreciated that the clamps described herein can fixedly attach to an outer pole structure and have features that are movable to pass through the pole and engage within an inner pole. That is, the clamps of the present disclosure are configured to directly engage with both the outer poles and the inner poles.

It should be noted that the terms "first," "second," "third," "upper," "top," "bottom," "lower," "front," and "rear" and the like may be used herein to modify various elements. These modifiers do not imply a spatial, sequential, or hierarchical order to modify the elements unless specifically stated. The term "about" is intended to include the degree of error associated with measurement of the particular quantity based upon the equipment available at the time of filing the application.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A telescoping pole system comprising:
a first pole;
a second pole, wherein the first pole is configured to fit within the second pole;
a third pole, wherein the second pole is configured to fit within the third pole;
an adapter selectively coupled to a first end of the telescoping pole system;
at least one glide; and
a clamp operably coupled at the first end.

2. The telescoping pole system of claim **1,** wherein the first, second, and third pole have a multi-lobe geometry.

3. The telescoping pole system of claim **1,** further comprising a handle including a grip coupled to a second end of the telescoping pole system.

4. The telescoping pole system of claim 1, wherein the adapter is selectively coupled to a tool connector and selectively coupled to a cleaning implement.

5. The telescoping pole system of claim 1, wherein the adapter includes collar abutting the first end.

6. The telescoping pole system of claim 1, wherein the at least one glide includes a first glide located between the first pole and second pole and a second glide located between the second pole and third pole.

7. The telescoping pole system of claim 6, wherein the first glide is coupled to an exterior surface of first pole at a second end and the second glide is coupled to an exterior surface of the second pole at a second end.

8. The telescoping pole system of claim 7, wherein the first glide includes at least one protrusion that couples with at least one hole in the first pole and the second glide includes at least one protrusion that couples with at least one hold in the second pole.

9. The telescoping pole system of claim 7, wherein the first glide is chemically coupled to the exterior surface of the first pole and the second glide is chemically coupled to the exterior surface of the second pole.

10. The telescoping pole system of claim 6, further comprising ribs on an interior surface of the second pole and the third pole for contacting the first and second glide.

11. The clamp of claim 1, further comprising:
a body;
an overhead cam lock; and
a collar.

12. The clamp of claim 11, wherein the body includes a flange extending toward an exterior surface of a pole, contacting the at least one glide.

13. The telescoping pole system of claim 1, wherein the at least one glide contacts a bottom surface of a top portion of the clamp.

14. The clamp of claim 11, wherein the body has a first diameter opening at a first end and a second diameter opening at a second end, wherein the first diameter opening is smaller than the second diameter opening, and the body defines a through-aperture from the first diameter opening to the second diameter opening.

15. The clamp of claim 11, further comprising: a locking protrusion formed at an end of each locking extension; and at least one positioning protrusion formed on an interior surface of body.
